# EUROPEAN PATENT SPECIFICATION

(11) **EP 2 385 000 B1**
(45) Date of publication and mention of the grant of the patent: **09.01.2013**
(21) Application number: 11164642.8
(22) Date of filing: 03.05.2011
(51) Int. Cl.: B65G 1/08, B65G 47/88

(54) **Automated storage system for packages of medical drugs or the like**
Automatisiertes Lagersystem für Apothekenverpackung
Système de stockage automatique pour boîtes de médicaments

(30) Priority: 04.05.2010 IT PD20100142
(43) Date of publication of application: 09.11.2011
(73) Proprietor: Label Elettronica S.R.L., 35010 Limena (PD) (IT)
(72) Inventor: Rami, Enrico, 35013, PADOVA (IT); Rami, Margherita, 35013, PADOVA (IT)
(74) Representative: Modiano, Micaela Nadia

(56) References cited:
- EP-A1- 1 803 663
- WO-A1-00/10895
- GB-A- 967 993
- NL-C2- 1 023 154

## Description

The present invention relates to an expulsion device, particularly for the expulsion of packages of medical drugs from shelves of automated storage systems.

Nowadays in the field of retail pharmaceutical sales, automated storage systems are known which have shelves provided with chutes which are loaded with rows of consecutive packages.

Below the shelves, on the side where the lower ends of the chutes are facing, conveyor belts are provided that are adapted to receive the packages that are unloaded by the chutes.

The chutes are provided, at the lower end, with a block that retains the leading package of the row, thus preventing its spontaneous unloading from the chute.

Also provided are expulsion devices that are capable of unloading packages, on command, from a preset chute.

This way, a device commanding the automated storage system can be actuated in order to drive the expulsion from selected chutes of a preset number of packages.

These packages fall on the conveyor belts which transports them to a collection point where they are made available to the operator who requested them.

An expulsion device known today, which is disclosed in EPA1275597 and EPA1155978 in the name of French company Pharmacie Automatisme, comprises an elastic metal plate that faces toward a window that is open onto the chutes in proximity to their lower end.

This plate has a first end that is fixed to the chute and a second end that is integral with the core of an electromagnetic actuator.

When the coil of the electromagnetic actuator is powered, the core pushes the second end toward the first, bending the plate which thus protrudes through the window, lifting the package that is on top of it, thus causing it to defeat the block and its unloading from the chute.

The powering and command of the electromagnetic actuator also occur through the chute itself, which for this purpose is made of an electrically conductive material.

However, an automated storage system implemented in this way has drawbacks and aspects that can be improved.

Indeed, particularly in the case where there is a robotized device for loading packages into the chutes, this is subjected to interference with its correct operation, generated by the passage through the body of the chutes of the electrical signal to command and power the electromagnetic actuator.

Furthermore, the electrification of the chutes for the purpose of transmitting the command and power signal to the electromagnetic actuators results in low efficiency and reliability, and furthermore it can cause electrical discharge to be felt by an operator who might come into contact with the chutes, to the detriment of his or her safety.

What is more, the metal plate tends to act on an extended portion of the package to be unloaded, and in particular, therefore, it acts along a vertical plane that is relatively close to the vertical plane passing through the center of gravity of the package, thus defining a reduced lever arm that is compensated for by the extra force applied by the electromagnetic actuator with respect to what would be necessary to apply if there were a greater lever arm.

EP 1803663 A1 discloses an automated storage system according to the preamble of claim 1. It discloses a dispensing device for articles stacked in magazines, having a motor-driven stop which can be extended out of the magazine or retracted into the magazine for dispensing the article.

WO 00/10895 A1 discloses an automatic dispenser of objects by gravity on slides, particularly useful for dispensing compact discs, comprising means for retaining or releasing products or objects stored on the slides and means for ejecting said objects; said means are actuated by electronically controlled electromagnets.

Furthermore, in this field the need is felt of implementing structures of expulsion devices that are increasingly simple and reliable and which require less energy to use compared to the structures known today.

The aim of the present invention is to provide an automated storage system that overcomes the above mentioned drawbacks, by making it possible to achieve the expulsion of packages from chutes in an easier manner than the storage systems known today.

Within this aim, an object of the invention is to provide an automated storage system that makes it possible to expel packages from chutes with lower energy consumption than conventional storage systems.

Another object of the invention is to provide an automated storage system that enables an efficient use of robots to supply the chutes by preventing interference with their operation which can derive from commanding and/or powering the devices for expelling the packages from the chutes.

A further object of the invention is to provide an automated storage system that makes it possible to safeguard the safety of operators during its operation.

Another object of the invention is to provide an automated storage system that is structurally and functionally simple, and that can be produced at low cost.

This aim and these objects, as well as others which will become better apparent hereinafter, are achieved by an automated storage system, particularly for collecting and distributing products such as packages of medical drugs or the like, according to claim 1.

Further characteristics and advantages of the invention will become better apparent from the detailed description that follows of a preferred, but not exclusive, embodiment of the automated storage system, according to the invention, which is illustrated for the purposes of non-limiting example in the accompanying drawings, wherein:
Figure 1 is an enlarged and partially sectional view of a detail of an automated storage system according to the invention;
Figure 2 is an enlarged view of a detail of the automated storage system according to the invention;
Figure 3 is a view of a simplified diagram of the automated storage system according to the invention;

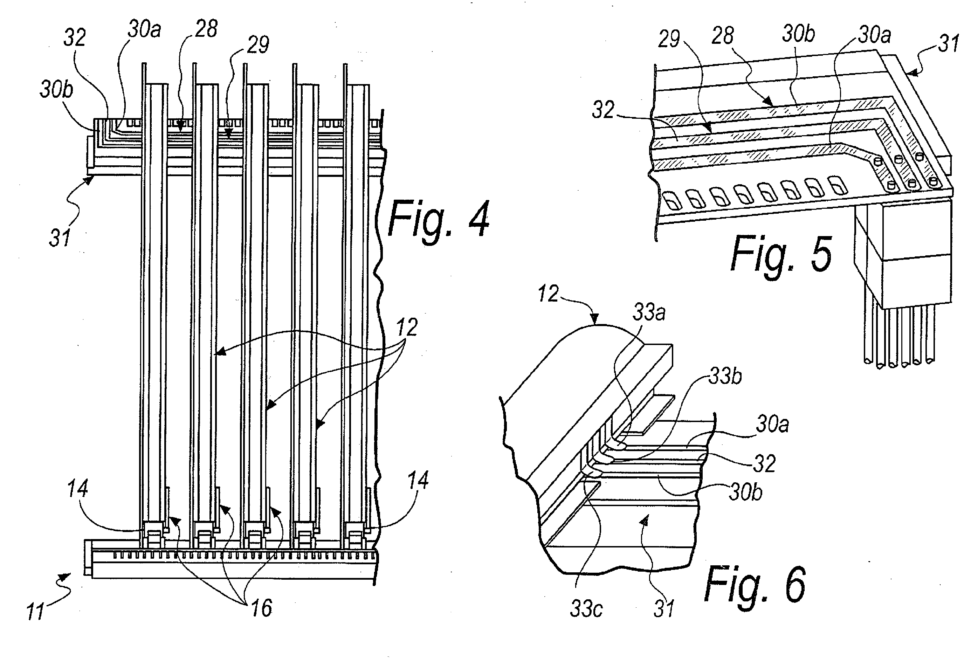

Figure 4 is a front elevation view of part of the automated storage system according to the invention;
Figure 5 is an enlarged perspective view of a detail of the automated storage system according to the invention;
Figure 6 is an enlarged perspective view of a detail of part of the automated storage system according to the invention.

It should be noted that anything found to be already known during the patenting process is understood not to be claimed and to be the subject of a disclaimer.

With reference to the figures, the reference numeral 10 generally designates an automated storage system, particularly for collecting and distributing products such as packages of medical drugs or the like, comprising a frame 11 that supports rows of chutes 12 which, during use, contain a row of selected products 13, blocks 15 being provided, at a discharge end 14 of the chutes 12, for retaining the leading product 13a of the products 13.

According to the invention, the automated storage system 10 has a peculiarity in that it is provided with devices 16 for expelling products 13 from the chutes 12, which comprise
- an actuator 17, which is supported by the chutes 12,
- a rocker 18, which has an arm 19 that is aligned with a window 20 that is open onto the bottom 21 of the chutes 12, adjacent to the blocks 15, and which is pivoted to the chutes 12 so that it can rotate in order to pass through the window 20,
- a linkage 22 for interconnection of the moving part 23 of the actuator 17 to the rocker 18.

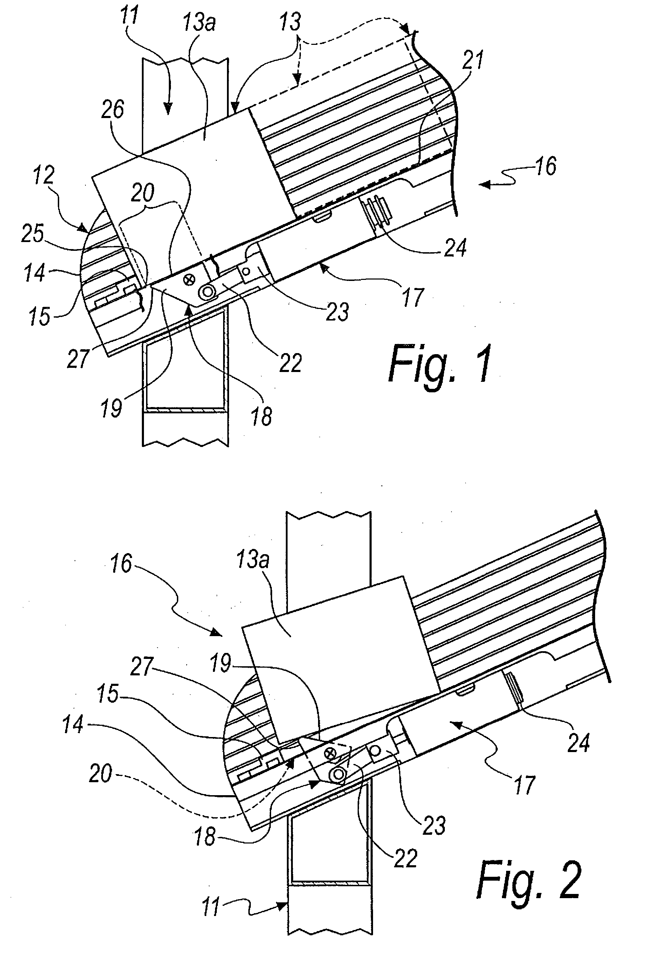

A command device 40 for actuating the expulsion devices 16 is also provided which is adapted to actuate their transition
- from an inactive position, in which the arm 19 is retracted externally to the chutes 12 so as to not interfere with the products 13 arranged therein, such as for example shown, for the purposes of non-limiting example, in Figure 1,
- to an expulsion configuration, in which the arm 19 is rotated thanks to the action of the actuator 17, in contrast with elastic means 24, so as to protrude from the bottom 21 through the window 20 in order to lift on the bottom 21 the leading package so as to allow it to move beyond the blocks 15,
- and vice versa.

Conveniently, the elastic means 24 are implemented by means of a helical spring for returning the moving part 23 of the actuator 17.

Advantageously, the actuator 17 is of the electromagnetic type.

Furthermore, the blocks 15 conveniently protrude at the lower edge 25 of the window 20, the arm 19 having
- an upper face 26, which in the inactive configuration is substantially flush with the bottom 21,
- a free end 27, which in the inactive configuration substantially skims the lower edge 25.

Also conveniently provided are
- a circuit 28 for supplying power to the expulsion devices 16,
- a circuit 29 for actuating the expulsion devices, which is separate from the power supply circuit 28,

The circuits 28 and 29 are electrically connected to the command device 40 in order to be supplied with power thereby.

The power supply circuit 28 comprises two power supply tracks 30a and 30b which are arranged in parallel on a cross-member 31 that supports the chutes 12.

The actuation circuit 29 comprises a track 32 for transmitting actuation signals, which is supported by the cross-member 31.

In alternative embodiments of the invention, in a substantially equivalent manner, the power supply circuit can comprise a plurality of power supply tracks and correspondingly of transmission tracks, according to the contingent requirements.

The chutes 12 furthermore are provided with
- contacts 33a, 33b and 33c for connection to the tracks 30a, 30b and 32,
- means for the electrical connection of the contacts 33a, 33b and 33c with the expulsion devices 16, for example implemented in a way that is known per se with electrical wires and not shown in the accompanying figures, and
- an electronic recognition device, which is connected to the contacts 33a, 33b and 33c in order to report to the command device 40 the network connection of the device among the expulsion devices 16 that corresponds thereto, not shown in the accompanying figures.

Operation of the automated storage system 10, according to the invention, is the following.

The products 13 are ordered in the chutes 12 for example by means of a robot, not shown in the accompanying figures, so that each chute 12 carries preset products 13.

The command device 40 is provided with a databank that matches each product code with a preset one of the chutes 12, into which that product is loaded.

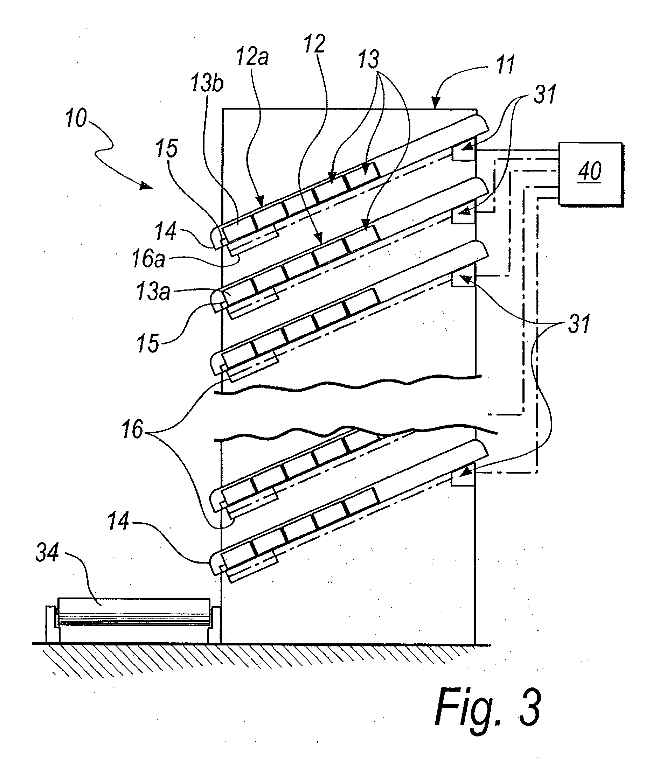

For the purposes of example, in Figure 3 a selected product 13b is shown which is requested by the operator, and which is carried by the preset chute 12a onto which it is loaded and from which it can be unloaded, by means of the corresponding expulsion device 16a, onto a conveyor belt 34 that is provided at the foot of the frame 11.

In this way, at the command of the operator, the command device 40 actuates the preset expulsion device 16a which unloads the selected product 13b from the preset chute 12a.

The selected product 13b is then brought by the conveyor belt 34 to outside the automated storage system 10 and thus made available to the operator who requested it.

In particular, the command device 40 detects the expulsion devices 16 that are connected thereto by means of the circuits 28 and 29 to be commanded thereby, each of which is identified by the corresponding electronic recognition device.

For the expulsion of the leading products 13a from the chutes 12, the corresponding actuators 16 are commanded by the command device to pass from the inactive configuration to the expulsion configuration, in which the leading products 13a are lifted so that they can move beyond the blocks 15 and thus be unloaded from the chutes 12.

Once the selected product 13b is expelled, the preset expulsion device 16a is commanded to return to the inactive configuration.

In this way a successive one of the products 13 descends by gravity along the chute, becoming a leading product 13a that is ready for expulsion on command.

In practice it has been found that the invention fully achieves the intended aim and objects by providing an automated storage system that overcomes the drawbacks of the known automated storage systems, specifically by making it possible to obtain the expulsion of packages from the chutes in an easier manner than in conventional storage systems , due to the distinctive expulsion devices according to the invention.

Furthermore, an automated storage system according to the invention makes it possible to expel packages from chutes with a lower energy consumption compared to conventional storage systems, by acting on products to be expelled in proximity to their end that is in contact with the blocks, thus substantially exploiting the maximum lever arm that the product makes available, the force demanded of the actuator to lift the product thus being smaller.

Furthermore, an automated storage system, according to the invention, enables an efficient use of robots to supply the chutes by preventing interference with their operation which can derive from commanding and/or powering the devices for expelling the packages from the chutes.

Also, an automated storage system according to the invention makes it possible to safeguard the safety of operators during its operation, by not presenting exposed electrified parts with which the operator could easily come into contact.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An automated storage system, particularly for collecting and distributing products such as packages of medical drugs or the like, comprising a frame (11) that supports rows of chutes (12) which, during use, contain a row of selected products (13), blocks (15) being provided, at the discharge end (14) of said chutes (12), for retaining the leading product (13a) of said products (13), and devices (16) for expelling said products (13) from said chutes (12), which comprise
- an actuator (17), which is supported by said chutes (12),
- a rocker (18), which has an arm (19) that is aligned with a window (20) that is open onto the bottom (21) of said chutes (12), adjacent to said blocks (15), and which is pivoted to said chutes (12) so that it can rotate in order to pass through said window (20),
- a linkage (22) for interconnection of the moving part (23) of said actuator (17) to said rocker (18);
a command device (40) for actuating said expulsion devices (16) being also provided which is adapted to actuate their transition
- from an inactive position, in which said arm (19) is retracted externally to said chutes (12) so as to not interfere with the products (13) arranged therein,
- to an expulsion configuration, in which said arm (19) is rotated thanks to the action of said actuator (17), in contrast with elastic means (24), so as to protrude from said bottom (21) through said window (20) in order to lift on said bottom (21) said leading package (13a) so as to allow it to move beyond said blocks (15),
- and vice versa,
**characterized in that** it comprises:
- a circuit (28) for supplying power to said expulsion devices (16), comprising at least two power supply tracks (30a, 30b), which are arranged in parallel on a cross-member (31) with respect to said chutes (12)
- a circuit (29) for actuating said expulsion devices (16), which is separate from said power supply circuit (28), comprising at least one track (32) for transmitting actuation signals, which is supported by said cross-member (31),
said circuits being connected electrically to said command device (40) in order to be supplied with power thereby.

2. The automated storage system according to claim 1, **characterized in that** said actuator (17) is of the electromagnetic type.

3. The automated storage system according to one or more of the preceding claims, **characterized in that** said blocks (15) protrude at the lower edge (25) of said window (20), said arm (19) having
- an upper face (26), which in said inactive configuration is substantially flush with said bottom (21),
- a free end (27), which in said inactive configuration substantially skims said lower edge (25).

4. The automated storage system according to claim 1, **characterized in that** said chutes (12) support
- contacts (33a, 33b, 33c) for connection to said tracks (30a, 30b, 32),
- means for the electrical connection of said contacts (33a, 33b, 33c) to said expulsion devices (16) and
- an electronic recognition device, which is connected to said contacts (33a, 33b, 33c) to report to said command device (40) the network connection of the device among the expulsion devices (16) that corresponds thereto.

## Patentansprüche

1. Ein automatisiertes Lagersystem, insbesondere zum Sammeln und Verteilen von Produkten wie Verpackungen medizinischer Arzneimittel oder Ähnlichem, das einen Rahmen (11) umfasst, welcher Reihen von Rutschen (12) trägt, die im Gebrauch eine Reihe ausgewählter Produkte (13) enthalten, wobei Blöcke (15) am Abgabeende (14) der Rutschen (12) bereitgestellt sind, um das führende Produkt (13a) der Produkte (13) zu halten, und Vorrichtungen (16) zum Ausstoßen der Produkte (13) von den Rutschen (12), die Folgendes umfassen:
- einen Aktor (17), der von den Rutschen (12) getragen wird,
- eine Wippe (18), die einen Arm (19) hat, der mit einem Fenster (20) ausgerichtet ist, das zum Boden (21) der Rutschen (12) hin offen ist, angrenzend an die Blöcke (15), und der gelenkig mit den Rutschen (12) verbunden ist, so dass er sich drehen kann, um durch das Fenster (20) zu passen,
- eine Koppelung (22) zur Verbindung des beweglichen Teils (23) des Aktors (17) mit der Wippe (18),
wobei auch eine Steuervorrichtung (40) zur Betätigung der Ausstoßvorrichtungen (16) bereitgestellt ist, die ausgebildet ist, um ihren Übergang zu betätigen, und zwar
- von einer inaktiven Position, in welcher der Arm (19) außerhalb der Rutschen (12) zurückgezogen ist, um nicht mit den darin angeordneten Produkten (13) zu interferieren,
- in eine Ausstoßanordnung zu betätigen, in welcher der Arm (19) aufgrund der Wirkung des Aktors (17) gedreht ist, gegen die elastischen Mittel (24), so dass er durch das Fenster (20) aus dem Boden (21) herausragt, um auf dem Boden (21) die führende Verpackung (13a) zu heben, um es ihr zu ermöglichen, sich über die Blöcke (15) hinaus zu bewegen,
- und umgekehrt,
**dadurch gekennzeichnet, dass** es Folgendes umfasst:
- einen Schaltkreis (28) zur Zuführung von Strom an die Ausstoßvorrichtungen (16), der mindestens zwei Stromversorgungs-Leiterbahnen (30a, 30b) umfasst, welche parallel auf einem Querglied (31) im Verhältnis zu den Rutschen (12) angeordnet sind,
- einen Schaltkreis (29) zur Betätigung der Ausstoßvorrichtungen (16), der separat von dem Stromversorgungskreis (28) ist und mindestens eine Leiterbahn (32) zur Übertragung von Aktivierungssignalen umfasst, die von dem Querträger (31) getragen wird,
wobei die Schaltkreise elektrisch mit der Steuervorrichtung (40) verbunden sind, um dadurch mit Strom versorgt zu werden.

2. Das automatisierte Lagersystem gemäß Anspruch 1, **dadurch gekennzeichnet, dass** der Aktor (17) vom elektromagnetischen Typ ist.

3. Das automatisierte Lagersystem gemäß einem oder mehreren der obigen Ansprüche, **dadurch gekennzeichnet, dass** die Blöcke (15) an der Unterkante (25) des Fensters (20) herausragen, wobei der Arm (19) Folgendes hat:
- eine obere Fläche (26), die in der inaktiven Anordnung im Wesentlichen mit dem Boden (21) fluchtet,
- ein freies Ende (27), das in der inaktiven Anordnung im Wesentlichen die Unterkante (25) berührt.

4. Das automatisierte Lagersystem gemäß Anspruch 1, **dadurch gekennzeichnet, dass** die Rutschen (12) Folgendes tragen:
- Kontakte (33a, 33b, 33c) zur Verbindung mit den Leiterbahnen (30a, 30b, 32),
- Mittel für den elektrischen Anschluss der Kontakte (33a, 33b, 33c) an die Ausstoßvorrichtungen (16) und
- eine elektronische Erkennungsvorrichtung, die mit den Kontakten (33a, 33b, 33c) verbunden ist, um an die Steuervorrichtung (40) die Netzwerkverbindung der Vorrichtung unter den Ausstoßvorrichtungen (16) zu melden, die dieser entspricht.

## Revendications

1. Système de stockage automatisé, en particulier pour la collecte et la distribution de produits tels que des boîtes de médicaments ou analogues, comportant un châssis (11) qui supporte des rangées de goulottes (12) lesquelles, pendant l'utilisation, contiennent une rangée de produits sélectionnés (13), des blocs (15) étant fournis, à l'extrémité de décharge (14) desdites goulottes (12), pour retenir le produit de tête (13a) desdits produits (13), et des dispositifs (16) pour expulser lesdits produits (13) desdites goulottes (12), comportant
- un actionneur (17), lequel est supporté par lesdites goulottes (12),
- une bascule (18), laquelle comporte un bras (19) qui est aligné avec une fenêtre (20) ouverte sur la partie inférieure (21) desdites goulottes (12), adjacente auxdits blocs (15), et qui est amenée par pivotement dans lesdites goulottes (12) de manière à pouvoir tourner afin de passer à travers ladite fenêtre (20),
- une liaison (22) pour l'interconnexion de la partie mobile (23) dudit actionneur (17) avec ladite bascule (18),
un dispositif de commande (40) pour actionner lesdits dispositifs d'expulsion (16) étant également prévu, lequel est adapté pour actionner leur transition
- d'une position inactive, dans laquelle ledit bras (19) est rétracté à l'extérieur desdites goulottes (12) de manière à ne pas interférer avec les produits (13) disposés dans celles-ci,
- à une configuration d'expulsion, dans laquelle ledit bras (19) est mis en rotation grâce à l'action dudit actionneur (17), par contraste avec des moyens élastiques (24), de manière à faire saillie à partir de ladite partie inférieure (21) par l'intermédiaire de ladite fenêtre (20) dans le but de lever ladite partie inférieure (21) de ladite boîte de tête (13a) afin de lui permettre de se déplacer au-delà desdits blocs (15),
- et vice versa,
**caractérisé en ce qu'**il comporte :
- un circuit (28) pour délivrer de l'énergie auxdits dispositifs d'expulsion (16), comportant au moins deux pistes d'alimentation (30a, 30b), lesquelles sont agencées en parallèle sur un élément transversal (31) par rapport auxdites goulottes (12),
- un circuit (29) pour actionner lesdits dispositifs d'expulsion (16) lequel est séparé dudit circuit d'alimentation (28), comportant au moins une piste (32) pour transmettre des signaux d'actionnement, qui est supportée par ledit élément transversal (31), lesdits circuits étant reliés électriquement audit dispositif de commande (40) afin d'être ainsi alimentés en énergie.

2. Système de stockage automatisé selon la revendication 1, **caractérisé en ce que** ledit actionneur (17) est du type électromagnétique.

3. Système de stockage automatisé selon l'une ou plusieurs des revendications précédentes, **caractérisé en ce que** lesdits blocs (15) font saillie sur le bord inférieur (25) de ladite fenêtre (20), ledit bras (19) ayant
- une face supérieure (26), laquelle, dans ladite configuration inactive, est sensiblement de niveau avec ladite partie inférieure (21),
- une extrémité libre (27), laquelle, dans ladite configuration inactive effleure sensiblement ledit bord inférieur (25).

4. Système de stockage automatisé selon la revendication 1, **caractérisé en ce que** lesdites goulottes (12) supportent
- des contacts (33a, 33b, 33c) pour la connexion auxdites pistes (30a, 30b, 32),
- des moyens pour la connexion électrique desdits contacts (33a, 33b, 33c) auxdits dispositifs d'expulsion (16) et
- un dispositif de reconnaissance électronique, lequel est connecté auxdits contacts (33a, 33b, 33a) pour signaler au de dit dispositif de commande (40) la connexion réseau du dispositif parmi les dispositifs d'expulsion (16) qui lui correspondent.
